# EUROPEAN PATENT SPECIFICATION

(11) **EP 1 493 931 B1**
(45) Date of publication and mention of the grant of the patent: **14.11.2007**
(21) Application number: 04251185.7
(22) Date of filing: 02.03.2004
(51) Int. Cl.: F16B 19/00

(54) **Resilient Clamping pin**
Bördelrandspannstift
Goujon de serrage à tête évasée

(30) Priority: 01.07.2003 US 483627 P
(43) Date of publication of application: 05.01.2005
(73) Proprietor: Powers Fasteners Europe BV, 1771 SV Wieringerwerf (NL)
(72) Inventor: Gaudron, Paul, Stamford, CT 06902 (US)
(74) Representative: Baldwin, Mark

(56) References cited:
- EP-A- 0 215 675
- EP-A- 0 701 068
- EP-A- 0 870 936
- GB-A- 1 164 060
- US-A- 2 240 425

## Description

The present invention relates to resilient clamping pins, and in particular to resilient clamping pins for fixing wooden plates, facings and suchlike to walls of buildings or the like.

### BACKGROUND TO THE INVENTION

A clamping pin of this type is known from DE-U1-29707437. The clamping pin described therein is a flanged edge clamping pin consisting of a metallic sleeve having a continuous longitudinal slit. The longitudinal slit is formed such that at one end of the sleeve it is narrower than the wall thickness of the sleeve.

A disadvantage of this design is that it permits only small tolerances during production. This is because on the one hand, it must be ensured that the gap at the sleeve end is indeed narrower than the wall thickness of the sleeve (this is in order to prevent chaining) and on the other hand, the presence of a narrow gap must be ensured, in order to guarantee some compressibility of the clamping pin tip when introducing the clamping pin in a prepared hole. In any case, the compressibility of the clamping pin tip is restricted by the narrowness of the gap.

Another disadvantage of prior art flanged edge resilient clamping pins is the lack of stability of the flanged edge. This can result in unwanted deformation of the flanged edge when hammering the clamping pin into a wall.

EP-A-0 701 068 discloses a resilient clamping pin for insertion in respective bores in two parts to secure the two parts together by a force generated by compression of the clamping pin in the bores, said clamping pin comprising a sleeve and a flange, said sleeve being defined by an arcuate wall having a first end, a second end and respective edges extending between said first and second ends and said flange projecting outwardly of the sleeve from said second end. The sleeve has opposed edges stretching between its ends that define a slit extending between those ends. The slit defining edges are disposed at different radial distances from the sleeve axis so that when the sleeve is driven into a bore that is smaller than the sleeve, the edge that is disposed radially closer to the sleeve axis can move under the other edge to provide an overlap between the areas of the sleeve adjacent the edges.

US-A-2 240 425 discloses a resilient clamping pin for insertion in respective bores in two parts to secure the two parts together by a force generated by compression of the clamping pin in the bores, said clamping pin comprising a sleeve and an integral flange projecting outwardly from an end of the sleeve. The clamping pin has a slit that extends the full length of the pin and a pair of triangular projections that extend perpendicular to the flange and parallel to the axis of the sleeve. The projections are formed by making a cut through the flange that is at an angle with respect to the radial direction of the flange and bending a portion of the flange out of the plane of the flange. The projections are for penetrating wood or relatively soft materials to prevent relative rotational movement of the clamping pin and the material into which it has been forced.

### SUMMARY OF THE INVENTION

The invention provides a resilient clamping pin for insertion in respective bores in two parts to secure the two parts together by a force generated by compression of the clamping pin in the bores, said clamping pin comprising a sleeve and a flange, said sleeve being defined by an arcuate wall having a first end, a second end and respective edges extending between said first and second ends and said flange projecting outwardly of the sleeve at said second end, characterised in that said edges are spaced apart to define a slit extending from said second end to an area at said first end where respective edge portions of said wall overlap to close said slit at said area at said first end.

By overlapping the edge portions of the sleeve wall adjacent, or at, the first end of the clamping pin, chaining of the clamping pins is prevented. Also, the overlapping edge portions, when exposed to a compression load (e.g. during the insertion into a prepared bore, or hole), can overlap further, improving the compressibility of the sleeve at the first end and facilitating entry into a tight hole. Thus, the ability of the pin to deform is not limited by the design and dimensions of the longitudinal slit.

Preferably, the first end of the clamping pin is tapered by the overlap of the edge portions, which facilitates its insertion into bore holes and the like.

In an advantageous embodiment, the sleeve is a hollow cylinder and made by forming the cylinder from a resilient sheet material. This means the sleeve can be produced in a simple and inexpensive manner. For example, in a first step, the sleeve can be produced by rolling the sheet material followed by a second step in which the overlap is produced. The overlap may be produced by a pressing or an upsetting operation.

Advantageously, the overlap is at least equal to the thickness of the sleeve wall. This should substantially prevent loosening of the overlap and canting of the ends of the sleeve wall.

Advantageously, the flange is provided with at least one projecting formation. The or each projection may be formed by pressing and could, for example, be defined by an indentation pressed into the flange.

The flange is stiffened by the at least one formation. Accordingly, a better transmission of hammer blows from the flange to the sleeve is achieved. At the same time, the risk of unwanted deformation of the flange is reduced.

The formations can be formed by making indentations in the flange.

Preferably, the at least one formation projects from an underside of said flange towards said first end. In this embodiment, the formations can engage with a structural part into which the pin is inserted, thereby restricting axial rotation of the pin.

Preferably, the at least one formation has sidewalls that taper towards said first end to a substantially rectangular undersurface. This increases the stiffness of the flange.

In the illustrated embodiment, the flange comprises an arched portion that extends from said second end of the sleeve to a planar portion that extends perpendicular to the axis of the sleeve, said at least one formation being provided on said arched portion.

In the illustrated embodiment, the slit extends through the flange.

In the illustrated embodiment, the flange has a peripheral edge comprising an arcuate portion and respective straight portions extending from the ends of said arcuate portion towards the slit.

Preferably, there is a plurality of said projections equally spaced apart on a common pitch circle. This provides an even stiffening of the flange.

### BRIEF DESCRIPTION OF THE DRAWINGS

An embodiment of the invention, which is given purely by way of example, will now described with reference to the drawings, in which:
Figure 1 shows a resilient clamping pin according to an embodiment of the invention in use securing two parts (shown in section); and
Figure 2 a view of an end of the resilient clamping pin of Figure 1 looking from above.

### DESCRIPTION OF THE PREFERRED EMBODIMENT

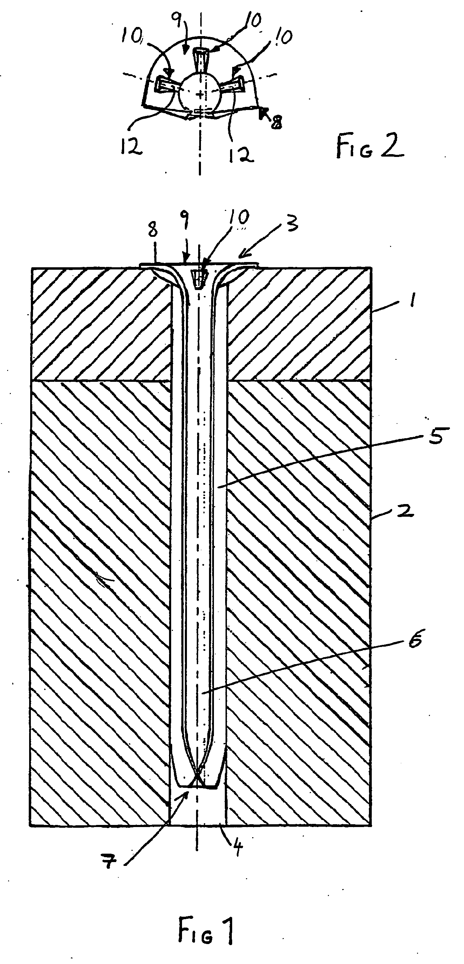

Figure 1 illustrates a resilient clamping pin 3 according to an embodiment of the invention inserted into structural parts 1 and 2. The clamping pin extends in a bore 4 in the structural parts 1 and 2 and fixes the structural part 1 to the structural part 2.

The clamping pin 3 comprises a sleeve 5 defined by an arcuate wall having a longitudinal slit 6. At one sleeve end 7, the edges 8 of the sleeve wall overlap in a circumferential direction of the sleeve 5. The overlap at the sleeve end 7 provides a tapered lead-in, facilitating insertion of the pin into suitably sized bores. The longitudinal slit 6, which is defined by the edges 8 of the sleeve wall, extends from the top end of the pin 3 to the area where the sleeve wall overlaps.

Referring to Figure 2, the top end of the pin 3 is provided with an outwardly projecting arched flange 9. The sleeve 5 and flange 9 are one piece. Formations 10 are provided at intervals around the circumference of the flange 9. Preferably, the formations are evenly spaced on a common pitch circle. The formations 10 have side walls projecting from the flange 9 towards the end 7 of the sleeve to a substantially rectangular wall, or undersurface, 12 that is spaced from the flange. The formations 10 extend radially outwardly. The formations 10 serve to stiffen the flange 9. In addition, the formations 10 can engage with the structural part 1 to prevent a rotation of the pin 3 in the bore 4.

Preferably, the formations are formed by a process, such as pressing, that deforms the surfaces of the flange 9. Although shown as discrete projections, the formations could take the form of corrugations.

The pin 3 is intended to be used in a bore 4 that has a smaller diameter than that of the pin 3. The pin 3 is compressed during insertion into the bore 4, i.e. the edges 8 of the sleeve wall are moved towards one another thereby narrowing the slit 6 and increasing the extent of overlap at the sleeve end 7. The compression of the pin produces a reaction force that presses the sleeve wall against the bore wall so that the pin is firmly held in the bore 4 and fixes the structural parts 1 and 2 to one another.

## Claims

1. A resilient clamping pin (3) for insertion in respective bores in two parts (1, 2) to secure the two parts together by a force generated by compression of the clamping pin (3) in the bores, said clamping pin (3) comprising a sleeve (5) and a flange (9), said sleeve (5) being defined by an arcuate wall having a first end (7), a second end and respective edges (8) extending between said first and second ends and said flange (9) projecting outwardly of the sleeve at said second end, **characterised in that** said edges (8) are spaced apart to define a slit (6) extending from said second end to an area at said first end (7) where respective edge portions of said wall overlap to close said slit (6) at said area at said first end (7).

2. A clamping pin as claimed in claim 1, wherein said arcuate wall comprises a resilient sheet material.

3. A clamping pin as claimed in claim 1 or 2, wherein said arcuate wall has a thickness and said overlap is at least equal to said thickness.

4. A clamping pin as claimed in claim 1, 2 or 3, wherein said overlap defines a taper that narrows towards said first end.

5. A clamping pin as claimed in claimed in any one of the preceding claims, wherein said flange (9) is provided with at least one projecting formation (10).

6. A clamping pin as claimed in claim 5, wherein said at least one formation (10) has a length that extends radially outwardly with respect to said sleeve (5) and a width extending perpendicular to said length, said length being greater than said width.

7. A clamping pin as claimed in claim 5 or 6, wherein said at least one formation (10) projects from an underside of said flange (9) towards said first end (7).

8. A clamping pin as claimed in claim 5, 6 or 7, wherein said at least one formations (10) has sidewalls that taper towards said first end to a substantially rectangular undersurface (12).

9. A clamping pin as claimed in any one of claims 5 to 8, wherein said at least one formation (10) is defined by an indentation in said flange (9).

10. A clamping pin as claimed in any one of claims 5 to 9, wherein said flange (9) comprises an arched portion that extends from said second end of the sleeve to a planar portion that extends perpendicular to the axis of the sleeve (5), said at least one formation (10) being provided on said arched portion.

11. A clamping pin as claimed in any one of claims 5 to 10, comprising a plurality of said formations (10) equally spaced apart on a common pitch circle.

12. A clamping pin as claimed in any one of the preceding claims, wherein said slit (6) extends through said flange (9).

13. A clamping pin as claimed in claim 12, wherein said flange (9) has a peripheral edge comprising an arcuate portion and respective straight portions extending from the ends of said arcuate portion towards said slit (6).

14. A clamping pin as claimed in any one of the preceding claims, wherein said sleeve (5) and said flange (9) are one-piece.

## Patentansprüche

1. Federnder Spannstift (3) zum Einsetzen in zugehörige Bohrungen in zwei Teilen (1, 2), um diese zwei Teile aneinander zu befestigen durch eine Kraft, die durch das Zusammendrücken des Spannstiftes (3) in den Bohrungen erzeugt wird, wobei der genannte Spannstift (3) eine Hülse (5) und einen Flansch (9) umfasst und die genannte Hülse (5) festgelegt ist durch eine bogenförmige Wand, welche ein erstes Ende (7), ein zweites Ende und zugehörige Ränder (8) aufweist, die sich zwischen dem genannten ersten und zweiten Ende erstrecken, und der genannte Flansch (9) am genannten zweiten Ende von der Hülse nach außen absteht, **dadurch gekennzeichnet, dass** die genannten Ränder (8) sich in einem gewissen Abstand voneinander befinden, um einen Schlitz (6) festzulegen, welcher sich vom genannten zweiten Ende bis zu einem Bereich am genannten ersten Ende (7) erstreckt, wo zugehörige Randabschnitte der genannten Wand einander überlappen, damit sich der genannte Schlitz (6) am genannten Bereich am genannten ersten Ende (7) schließt.

2. Spannstift nach Anspruch 1, bei welchem die genannte bogenförmige Wand ein federndes Blech umfasst.

3. Spannstift nach Anspruch 1 oder 2, bei welchem die genannte bogenförmige Wand eine gewisse Stärke aufweist und die genannte Überlappung mindestens gleich der genannten Stärke ist.

4. Spannstift nach Anspruch 1, 2 oder 3, bei welchem die genannte Überlappung eine Kegeligkeit festlegt, bei welcher die Verjüngung in Richtung auf das genannte erste Ende erfolgt.

5. Spannstift nach irgend einem der vorangehenden Ansprüche, bei welchem der genannte Flansch (9) mit mindestens einem abstehenden Gebilde (10) versehen ist.

6. Spannstift nach Anspruch 5, bei welchem das genannte mindestens eine Gebilde (10) eine sich in Bezug auf die genannte Hülse (5) radial nach außen erstreckende Länge und eine sich rechtwinklig zur genannten Länge erstreckende Breite aufweist, wobei die genannte Länge größer als die genannte Breite ist.

7. Spannstift nach Anspruch 5 oder 6, bei welchem das genannte mindestens eine Gebilde (10) von einer Unterseite des genannten Flansches (9) in Richtung auf das genannte erste Ende (7) absteht.

8. Spannstift nach Anspruch 5, 6 oder 7, bei welchem das genannte mindestens eine Gebilde (10) Seitenwände aufweist, welche sich in Richtung auf das genannte erste Ende zu einer im wesentlichen rechteckigen unteren Fläche (12) verjüngen.

9. Spannstift nach irgend einem der Ansprüche 5 bis 8, bei welchem das genannte mindestens eine Gebilde (10) durch eine Einkerbung im genannten Flansch (9) festgelegt ist.

10. Spannstift nach irgend einem der Ansprüche 5 bis 9, bei welchem der genannte Flansch (9) einen bogenförmigen Abschnitt umfasst, welcher sich vom genannten zweiten Ende der Hülse bis zu einem ebenen Abschnitt erstreckt, welcher sich rechtwinklig zur Achse der Hülse (5) erstreckt, wobei sich das genannte mindestens eine Gebilde (10) auf dem genannten bogenförmigen Abschnitt befindet.

11. Spannstift nach irgend einem der Ansprüche 5 bis 10, welcher eine gewisse Anzahl von den genannten Gebilden (10) umfasst, die sich auf einem gemeinsamen Teilkreis gleichmäßig verteilt befinden.

12. Spannstift nach irgend einem der vorangehenden Ansprüche, bei welchem sich der genannte Schlitz (6) durch den genannten Flansch (9) hindurch erstreckt.

13. Spannstift nach Anspruch 12, bei welchem der genannte Flansch (9) einen umfänglichen Rand aufweist, welcher einen bogenförmigen Abschnitt und zugehörige gerade Abschnitte umfasst, die sich von den Enden des genannten bogenförmigen Abschnitts in Richtung auf den genannten Schlitz (6) erstrecken.

14. Spannstift nach irgend einem der vorangehenden Ansprüche, bei welchem die genannte Hülse (5) und der genannte Flansch (9) aus einem Stück bestehen.

## Revendications

1. Broche de serrage élastique (3) destinée à être insérée dans des alésages respectifs dans deux pièces (1, 2) pour fixer les deux pièces ensemble par une force générée par la compression de la broche de serrage (3) dans les alésages, ladite broche de serrage (3) comprenant un manchon (5) et un rebord (9), ledit manchon (5) étant défini par une paroi arquée présentant une première extrémité (7), une seconde extrémité et des bords (8) respectifs s'étendant entre lesdites première et seconde extrémités et ledit rebord (9) se projetant vers l'extérieur du manchon au niveau de ladite seconde extrémité, **caractérisée en ce que** lesdits bords (8) sont espacés les uns des autres pour définir une fente (6) s'étendant de ladite seconde extrémité à une zone au niveau de ladite première extrémité (7) dans laquelle les parties de bord respectives de ladite paroi se chevauchent pour fermer ladite fente (6) au niveau de ladite zone à ladite première extrémité (7).

2. Broche de serrage selon la revendication 1, dans laquelle ladite paroi arquée comprend un matériau de feuille élastique.

3. Broche de serrage selon la revendication 1 ou 2, dans laquelle ladite paroi arquée présente une épaisseur et ledit chevauchement est au moins égal à ladite épaisseur.

4. Broche de serrage selon la revendication 1, 2 ou 3, dans laquelle ledit chevauchement définit une conicité qui rétrécit en direction de ladite première extrémité.

5. Broche de serrage selon l'une quelconque des revendications précédentes, dans laquelle ledit rebord (9) est pourvu d'au moins une formation protubérante (10).

6. Broche de serrage selon la revendication 5, dans laquelle ladite au moins une formation (10) présente une longueur qui s'étend radialement vers l'extérieur par rapport au dit manchon (5) et une largeur s'étendant perpendiculairement à ladite longueur, ladite longueur étant supérieure à ladite largeur.

7. Broche de serrage selon la revendication 5 ou 6, dans laquelle ladite au moins une formation (10) se projette depuis un côté inférieur dudit rebord (9) en direction de ladite première extrémité (7).

8. Broche de serrage selon la revendication 5, 6 ou 7, dans laquelle ladite au moins une formation (10) présente des parois latérales qui sont inclinées en direction de ladite première extrémité vers une surface inférieure sensiblement rectangulaire (12).

9. Broche de serrage selon l'une quelconque des revendications 5 à 8, dans laquelle ladite au moins une formation (10) est définie par une empreinte dans ledit rebord (9).

10. Broche de serrage selon l'une quelconque des revendications 5 à 9, dans laquelle ledit rebord (9) comprend une partie arquée qui s'étend de ladite seconde extrémité du manchon à une partie planaire qui s'étend perpendiculairement à l'axe du manchon (5), ladite au moins une formation (10) étant prévue sur ladite partie arquée.

11. Broche de serrage selon l'une quelconque des revendications 5 à 10, comprenant une pluralité desdites formations (10) équidistantes sur un cercle primitif commun.

12. Broche de serrage selon l'une quelconque des revendications précédentes, dans laquelle ladite fente (6) s'étend à travers ledit rebord (9).

13. Broche de serrage selon la revendication 12, dans laquelle ledit rebord (9) présente un bord périphérique comprenant une partie arquée et des parties rectilignes respectives s'étendant des extrémités de ladite partie arquée en direction de ladite fente (6).

14. Broche de serrage selon l'une quelconque des revendications précédentes, dans laquelle ledit manchon (5) et ledit rebord (9) sont solidaires.
